# DEMANDE DE BREVET EUROPEEN

(11) **EP 1 622 410 A1**
(43) Date de publication de la demande: **01.02.2006**
(21) Numéro de dépôt: 05106364.2
(22) Date de dépôt: 12.07.2005
(51) Int. Cl.: H04Q 7/34

(54) **Procédé pour l'apprentissage de configuration de structures de localisation dans un système cellulaire de communications mobiles**

(30) Priorité: 29.07.2004 FR 0408424
(71) Demandeur: ALCATEL, 75008 Paris (FR)
(72) Inventeur: Lejeune, Christèle, 91570, BIEVRES (FR)

(57) **Abrégé**

Un des objets est un procédé pour l'apprentissage, par le réseau coeur d'un système cellulaire de communications mobiles, de configuration de structures de localisation dans le réseau d'accès radio dudit système, procédé incluant des étapes selon lesquelles :
- au moins une entité de réseau coeur (SGSN) reçoit d'au moins une entité de réseau d'accès radio (RNC) qu'elle contrôle, au moins un message relatif à une transaction avec un terminal mobile servi par ladite entité de réseau d'accès radio, ledit message incluant au moins une information d'identité de structure de localisation à laquelle appartient la cellule dans laquelle est localisé ledit terminal mobile au moment de la transmission dudit message,
- ladite entité de réseau coeur utilise ladite information pour acquérir une connaissance de la configuration de rattachement de structures de localisation aux entités de réseau d'accès radio qu'elle contrôle.

## Description

La présente invention concerne d'une manière générale les systèmes de communications mobiles.

D'une manière générale, les systèmes de communications mobiles font l'objet de normalisation, et pour plus d'informations on pourra se reporter aux normes correspondantes, publiées par les organismes de normalisation correspondants.

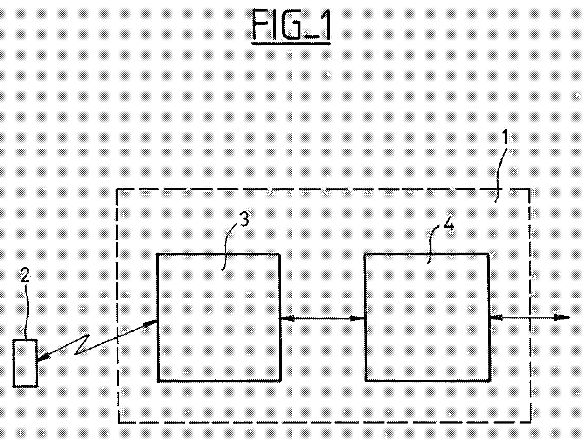

L'architecture générale d'un tel système est rappelée brièvement en relation avec la figure 1. Un tel système comporte un réseau de communications mobiles 1 communiquant avec des terminaux mobiles 2 et avec des réseaux extérieurs (non illustrés spécifiquement). Le réseau 1 comporte lui-même un réseau d'accès radio 3 (ou RAN, pour « Radio Access Network ») chargé principalement de la transmission et de la gestion des ressources radio sur l'interface radio entre le réseau et les terminaux mobiles, et un réseau coeur 4 (ou CN, pour « Core Network ») chargé principalement du routage et de la gestion des communications.

Les évolutions des besoins et de la technologie conduisent généralement à distinguer différents types de services, notamment des services de type circuit et des services de type paquet, et différents types de systèmes, notamment des systèmes de deuxième génération et des systèmes de troisième génération.

Un exemple typique de système de deuxième génération est le GSM (« Global System for Mobile communication »). Initialement, le GSM était principalement destiné à fournir des services de type circuit. Des services de type paquet ont ensuite été introduits, grâce à la fonctionnalité GPRS (« General packet Radio Service »).

Dans un système tel que le GSM/GPRS par exemple :
- le terminal mobile est appelé MS (« Mobile Station »),
- le réseau d'accès radio (ou RAN) est composé de sous-ensembles appelés BSS (« Base Station Subsystem »), comportant chacun un contrôleur de stations de base ou BSC (« Base Station Controller ») rattaché à une ou plusieurs stations de base ou BTS (« Base Transceiver Station »)
- le réseau coeur (ou CN) comporte notamment, pour un domaine lié à la commutation de circuit (ou « CS Domain » en anglais), des éléments de réseau de type 2G-MSC (où 2G est utilisé pour « 2nd Generation » et MSC est utilisé pour « Mobile Switching Center ») et, pour un domaine lié à la commutation de paquet (ou « PS Domain » en anglais), des éléments de réseau de type 2G-SGSN (où 2G est utilisé pour « 2nd Génération » et SGSN est utilisé pour «Serving GPRS Support Node »).

Un exemple typique de système de troisième génération est l'UMTS (« Universal Mobile Telecommunication System »).

Dans un système tel que l'UMTS par exemple :
- le terminal mobile est appelé UE (« User Equipment »),
- le réseau d'accès radio (ou RAN) est appelé UTRAN (« UMTS Terrestrial Radio Access Network »), et est composé de sous-ensembles appelés RNS (« Radio Network Subsystem »), comportant chacun un contrôleur de réseau radio ou RNC (« Radio Network Controller ») rattaché à une ou plusieurs stations de base appelées Node B,
- le réseau coeur (ou CN) comporte notamment, pour un domaine lié à la commutation de circuit (ou « CS Domain » en anglais), des éléments de réseau de type 3G- MSC (où 3G est utilisé pour « 3rd Generation » et MSC est utilisé pour « Mobile Switching Center ») et, pour un domaine lié à la commutation de paquet (ou « PS Domain » en anglais), des éléments de réseau de type 3G-SGSN (où 3G est utilisé pour « 3rd Generation » et SGSN est utilisé pour «Serving GPRS Support Node »).

D'une manière générale, ces systèmes ont une architecture cellulaire et, notamment dans un but de gestion de mobilité des utilisateurs et de contrôle des droits d'accès, les cellules d'un réseau donné sont regroupées en groupes de cellules ou structures de localisation appelées aussi zones de localisation (ou LA, pour « Location Area ») dans le cas de domaine circuit, ou zones de routage (ou RA, pour « Routing Area ») dans le cas de domaine paquet.

D'une manière générale, dans ces systèmes, des procédures de gestion de mobilité sont mises en oeuvre, qui nécessitent en général que des entités serveuses de réseau coeur (telles que SGSN par exemple pour le cas de domaine paquet) aient une connaissance de la configuration de structures de localisation (telles que RA par exemple pour le cas de domaine paquet) dans le réseau d'accès radio, notamment une connaissance de la configuration de rattachement des différentes structures de localisation aux différentes entités serveuses de réseau d'accès radio (telles que RNC par exemple pour le cas de système de troisième génération de type UMTS).

Dans ce qui suit, on considèrera, à titre d'exemple, le cas de domaine paquet, et de système de troisième génération de type UMTS.

Un exemple de telles procédures de gestion de mobilité est la procédure de recherche ou « paging » selon laquelle, lorsque des données sont à transférer à un UE, le réseau effectue préalablement une recherche ou « paging » dans la zone de routage ou RA dans laquelle est localisé l'UE. L'UE peut alors informer le réseau de la cellule dans laquelle il est localisé, et le transfert de données peut alors s'effectuer. Pour un fonctionnement correct du système, l'envoi de messages de « paging » doit donc être effectué par le SGSN vers le RNC qui contrôle la zone de routage ou RA dans laquelle est localisé l'UE. En d'autres termes, il est nécessaire, pour un fonctionnement correct du système, que le SGSN connaisse la configuration de rattachement des RA aux RNC qu'il contrôle.

D'autres exemples de telles procédures correspondent aux procédures de gestion de mobilité telles que les procédures dites d'attachement (ou « attach » en anglais) ou de mise à jour de zone de routage (ou « RA update » en anglais), au cours desquelles un contrôle de droits d'accès est effectué dans le réseau coeur. Le SGSN ne commencera à mettre en oeuvre ces procédures (ou à traiter le contenu des messages reçus) que pour les UE se trouvant dans une RA connue du SGSN. En d'autres termes, il est nécessaire, pour un fonctionnement correct du système, que le SGSN connaisse la configuration de rattachement des RA aux RNC qu'il contrôle.

La configuration de zones de routage est un des paramètres que l'opérateur peut fixer et modifier dans le cadre d'opérations d'exploitation et de gestion de son réseau, ou O&M (« Operation & Maintenance »). Par exemple, l'opérateur peut décider de supprimer une zone de routage, ou de la rattacher à un autre RNC.

Dans le cadre de telles opérations, des données de configuration de zones de routage sont généralement entrées deux fois successivement, une première fois dans le réseau d'accès radio et une deuxième fois dans le réseau coeur.

Une telle solution n'est pas optimale, notamment pour les raisons suivantes.

Une telle solution est contraignante car elle nécessite une coordination des opérations effectuées séparément dans le réseau d'accès radio et dans le réseau coeur.

Une telle solution est complexe à mettre en oeuvre dans le cas de réseau coeur comportant à la fois des équipements de type 2G SGSN connectés à des équipements de réseau d'accès radio de type BSS, et des équipements de type 3G SGSN connectés à des équipements de réseau d'accès radio de type UTRAN, car la gestion des zones de routage est généralement différente pour différentes technologies. En outre, une source de complexité supplémentaire est que dans le cas d'un même équipement 2G/3G SGSN connecté à la fois à des équipements de réseau d'accès radio de type BSS et à des équipements de réseau d'accès radio de type UTRAN, la gestion des zones de routage n'est pas homogène à l'intérieur d'un même équipement SGSN.

La présente invention a notamment pour but d'éviter de tels inconvénients.

Un des objets de la présente invention est un procédé pour l'apprentissage, par le réseau coeur d'un système cellulaire de communications mobiles, de configuration de structures de localisation dans le réseau d'accès radio dudit système, procédé incluant des étapes selon lesquelles :
- au moins une entité de réseau coeur (SGSN) reçoit d'au moins une entité de réseau d'accès radio (RNC) qu'elle contrôle, au moins un message relatif à une transaction avec un terminal mobile servi par ladite entité de réseau d'accès radio, ledit message incluant au moins une information d'identité de structure de localisation à laquelle appartient la cellule dans laquelle est localisé ledit terminal mobile au moment de la transmission dudit message,
- ladite entité de réseau coeur utilise ladite information pour acquérir une connaissance de la configuration de rattachement de structures de localisation aux entités de réseau d'accès radio qu'elle contrôle.

Un autre objet de la présente invention est une entité serveuse de réseau coeur pour système de communications mobiles, notamment une entité de type SGSN, comportant des moyens pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:
- la figure 1, décrite précédemment, rappelle l'architecture générale d'un système de communications mobiles,
- la figure 2 est destinée à illustrer un exemple de procédé suivant la présente invention,
- la figure 3 est destinée à illustrer un exemple de moyens à prévoir dans une entité de réseau coeur (telle que notamment une entité de type SGSN) pour mettre en oeuvre un procédé suivant la présente invention.

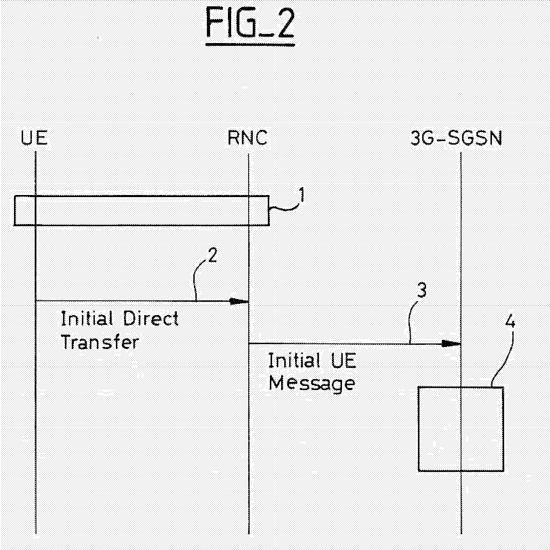

Sur la figure 2 sont illustrés certains échanges de signalisation mis en oeuvre pour l'établissement d'une connexion entre un terminal mobile et une entité serveuse de réseau coeur.

A titre d'exemple, on considère dans ce qui suit le cas de domaine paquet (ladite entité serveuse de réseau coeur correspondant alors à une entité de type SGSN) et le cas de système de troisième génération de type UMTS (le terminal mobile étant alors noté UE, et le SGSN étant alors noté 3G-SGSN).

On considère, comme illustré en 1 de la figure 2, qu'une connexion dite connexion RRC (« Radio Resource Control ») est établie entre le terminal mobile UE et une entité serveuse de réseau d'accès radio ou RNC, selon le protocole RRC applicable sur l'interface « Uu » entre UE et UTRAN, tel que décrit notamment dans la spécification 3GPP TS 25.331 publiée par le 3GPP (« 3rd Generation Partnership Project »).

Dans une étape notée 2, l'UE transmet au RNC, selon le protocole RRC, un message « Initial Direct Transfer », pour l'établissement d'une transaction avec le réseau, par exemple pour mettre en oeuvre une procédure d'attachement (ou « attach » en anglais), ou une procédure inverse de détachement (ou « detach » en anglais), ou une procédure de mise à jour de zone de routage (ou « RA update » en anglais), ou encore pour une requête de service.

Le message « Initial Direct Transfer » contient notamment un message NAS (« Non Access Stratum ») destiné à être transféré au SGSN de manière transparente au RNC.

Dans une étape notée 3, le RNC transmet au SGSN un message « Initial UE Message » selon le protocole RANAP (« Radio Access Network Application Part») applicable sur l'interface « lu » entre UTRAN et CN, tel que décrit notamment dans la spécification 3GPP TS 25.413 publiée par le 3GPP. Le but est d'établir une connexion de signalisation sur l'interface « lu » et de transférer au CN une unité de données appelée NAS-PDU correspondant au message NAS reçu par le RNC sur l'interface « Uu ».

Selon la spécification 3GPP TS 25.413, en plus de cette unité de données NAS-PDU, le message « Initial UE Message » contient d'autres informations, notamment l'information LAI+RAC (« Location Area Identity + Routing Area Code »), correspondant à la dernière information LAI+RAC indiquée à l'UE par l'UTRAN via la connexion RRC courante, ou, si l'UTRAN n' a pas encore indiqué d'information à l'UE via la connexion RRC courante, l'information LAI+RAC de la cellule via laquelle la connexion RRC courante a été établie. On rappelle que dans un système de troisième génération de type UMTS, certaines fonctions de gestion de mobilité sont prises en charge par le RNC ; l'information LAI + RAC est alors connue du RNC, dans le cadre de ces fonctions.

Selon la spécification 3GPP TS 25.413, l'information LAI + RAC est destinée à être utilisée par le réseau coeur dans un but de gestion de mobilité.

La présente invention propose que le réseau coeur utilise une telle information (qui sera aussi appelée ici information d'identité de zone de routage) pour résoudre simultanément un autre problème. La présente invention propose notamment que le SGSN utilise une telle information d'identité de zone de routage contenue dans le message « Initial UE Message » ainsi reçu de ce RNC, et de même des autres RNCs contrôlés par ce SGSN, pour acquérir automatiquement une connaissance de la configuration de rattachement des RAs aux RNCs contrôlés par ce SGSN. Une telle utilisation est illustrée au moyen d'une étape notée 4 sur la figure 2.

On notera que des informations d'identité de zone de routage sont également contenues dans un autre message transmis de RNC vers SGSN selon le protocole RANAP, ce message étant un message appelé « Direct Transfer », transmis dans une étape, non illustrée, postérieure à l'étape 3. Cependant, il est possible que le message « Direct transfer » ne soit pas transmis par le même RNC que le message « Initial UE ». On rappelle que pour une communication donnée relative à un UE donné, il existe un RNC, appelé SRNC (pour « Serving Radio Network Controller ») ayant un rôle de contrôle pour la communication considérée. On rappelle également qu'en cours de communication, le rôle de SRNC pour cette communication peut être transféré d'un RNC dit SRNC source (ou « source SRNC » en anglais) à un RNC dit SRNC cible (ou « target SRNC » en anglais), pour diverses raisons telles que notamment: optimisation des temps de transfert, optimisation d'allocation de ressources, optimisation de charge relative des différents RNC, ...etc. Un tel transfert est effectué selon une procédure dite de « relocation » (en anglais). L'information d'identité de zone de routage contenue dans le message « Direct Transfer » ne devrait donc pas être utilisée, en plus de l'information d'identité de zone de routage contenue dans le message « Initial UE » car sinon l'association RA - RNC pourrait ne pas être correcte.

Ainsi, comme expliqué précédemment, dès qu'un terminal mobile UE essaie de communiquer avec un SGSN, pour l'établissement d'une transaction avec le réseau, le RNC transmet un message « Initial UE message » au SGSN.

L'invention propose donc que le SGSN utilise les informations d'identité de zone de routage contenues dans les messages ainsi reçus de ce RNC, et de même d'autres RNC qu'il contrôle, pour acquérir automatiquement une connaissance de la configuration de rattachement des RAs aux RNCs contrôlés par ce SGSN.

Les données de configuration ainsi acquises peuvent être mémorisées dans une base de données appelée ici base de données de configuration de zones de routage, notamment sous la forme d'une association RA-RNC.

Lorsqu'une zone de routage est ensuite effacée dans le cadre d'opérations d'O&M pour le réseau d'accès radio, ou est déplacée d'un RNC à un autre, le SGSN devrait faire le changement correspondant dans la base de données de configuration de zones de routage du SGSN.

Cependant les protocoles de communication sur l'interface entre UTRAN et CN (ou interface « lu ») ne prévoient aucun message ou information qui permettrait au SGSN d'enlever automatiquement une zone de routage de cette base de données, sur la base d'informations venant directement de l'UTRAN.

La présente invention propose également une solution à ce problème. La présente invention propose que dès que le SGSN détecte qu'aucun trafic n'est enregistré dans une zone de routage, par exemple au bout d'une durée déterminée (par exemple à l'expiration d'une temporisation) que cette zone de routage soit effacée de cette base de données. Par exemple, le SGSN détecte qu'aucun trafic n'est enregistré dans une RA donnée lorsqu'il ne reçoit aucun message « Initial UE Message » d'un RNC connecté, à propos d'un UE se situant dans cette RA, pendant un laps de temps donné (cet intervalle de temps étant avantageusement configurable par O&M).

D'une manière générale, un des objets de la présente invention est un procédé pour l'apprentissage, par le réseau coeur d'un système cellulaire de communications mobiles, de configuration de structures de localisation dans le réseau d'accès radio dudit système, procédé incluant des étapes selon lesquelles :
- au moins une entité de réseau coeur reçoit d'au moins une entité de réseau d'accès radio qu'elle contrôle, au moins un message relatif à une transaction avec un terminal mobile servi par ladite entité de réseau d'accès radio, ledit message incluant au moins une information d'identité de structure de localisation à laquelle appartient la cellule dans laquelle est localisé ledit terminal mobile au moment de la transmission dudit message,
- ladite entité de réseau coeur utilise ladite information pour acquérir une connaissance de la configuration de rattachement de structures de localisation aux entités de réseau d'accès radio qu'elle contrôle.

Notamment, suivant l'exemple décrit précédemment, ladite structure de localisation peut correspondre à une zone de routage ou RA (« Routing Area »).

Notamment, suivant l'exemple décrit précédemment, ledit message correspond à un message transmis pour l'établissement d'une transaction entre station mobile et réseau.

Plus particulièrement, suivant l'exemple décrit précédemment, ledit message correspond à un message de type « Initial UE Message » transmis selon le protocole RANAP (« Radio Access Network Application Part») dans un système de troisième génération de type UMTS.

Un autre objet de la présente invention est une entité de réseau coeur, notamment une entité de type SGSN, comportant des moyens pour mettre en oeuvre un tel procédé.

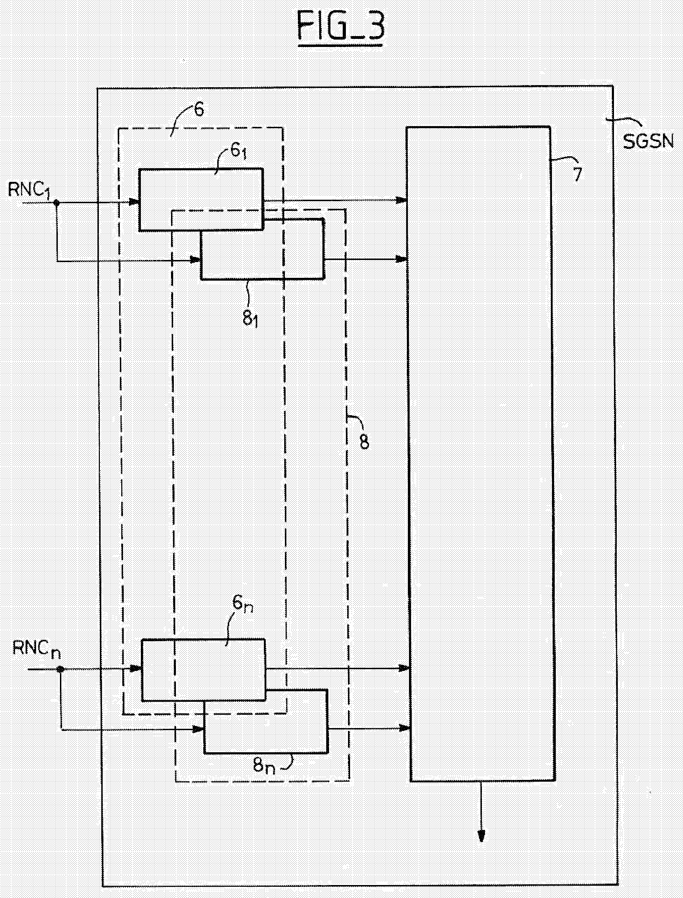

Comme illustré sur la figure 3, une entité de réseau coeur (telle qu'une entité SGSN) peut ainsi comporter, en plus d'autres moyens non rappelés ici car ne faisant pas partie de l'invention :
- des moyens dits premiers moyens pour recevoir d'au moins une entité de réseau d'accès radio (telle que RNC) qu'elle contrôle, au moins un message relatif à une transaction avec un terminal mobile servi par ladite entité de réseau d'accès radio, ledit message incluant au moins une information d'identité de structure de localisation à laquelle appartient la cellule dans laquelle est localisé ledit terminal mobile au moment de la transmission dudit message,
- des moyens dits deuxièmes moyens pour utiliser ladite information pour acquérir une connaissance de la configuration de rattachement de structures de localisation aux entités de réseau d'accès radio qu'elle contrôle.

Dans l'exemple illustré sur la figure 3, les premiers et les deuxièmes moyens ont été notés 6. Dans l'exemple illustré sur la figure 3, où un SGSN contrôle « n » RNC notés RNC1 à RNCn , les moyens 6 comportent des moyens notés 61 à 6n, permettant respectivement, à partir des informations d'identité de zone de routage reçues respectivement des RNCs RNC1 à RNCn, de connaître les RA qui leur sont rattachées, et de founir des données de configuration correspondantes.

Avantageusement, le SGSN comporte en outre :
- des moyens dits troisièmes moyens, pour mémoriser des données de configuration ainsi acquises, ces moyens étant notés 7 et étant aussi appelés base de données de configuration.

Avantageusement, le SGSN comporte en outre :
- des moyens dits quatrièmes moyens, pour effacer des données de configuration mémorisées dans la base de données 7, lorsqu'aucun trafic n'est enregistré dans dans une structure de localisation, notamment au bout d'une durée déterminée.

Dans l'exemple illustré sur la figure 3, les quatrièmes moyens ont été notés 8. Dans l'exemple, illustré sur la figure 3, où un SGSN contrôle « n » RNC notés RNC1 à RNCn, les moyens 8 comportent des moyens notés 81 à 8n, permettant respectivement, à partir d'informations de trafic reçues respectivement des RNCs RNC1 à RNCn, de détecter si aucun trafic n'est enregistré dans une RA donnée, auquel cas cette zone de routage peut être effacée de cette base de données.

Les données de configuration ainsi mémorisées dans la base de données 7 peuvent être utilisées notamment pour les raisons exposées dans l'introduction. Les moyens d'utilisation correspondants n'ont cependant pas été illustrés spécifiquement sur la figure 3.

Les différents moyens ainsi décrits peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

## Revendications

1. Procédé pour l'apprentissage, par le réseau coeur d'un système cellulaire de communications mobiles, de configuration de structures de localisation dans le réseau d'accès radio dudit système, procédé incluant des étapes selon lesquelles :
- au moins une entité de réseau coeur (SGSN) reçoit d'au moins une entité de réseau d'accès radio (RNC) qu'elle contrôle, au moins un message relatif à une transaction avec un terminal mobile servi par ladite entité de réseau d'accès radio, ledit message incluant au moins une information d'identité de structure de localisation à laquelle appartient la cellule dans laquelle est localisé ledit terminal mobile au moment de la transmission dudit message,
- ladite entité de réseau coeur utilise ladite information pour acquérir une connaissance de la configuration de rattachement de structures de localisation aux entités de réseau d'accès radio qu'elle contrôle.

2. Procédé selon la revendication 1, dans lequel ladite structure de localisation correspond à une zone de routage ou RA (« Routing Area »).

3. Procédé selon l'une des revendications 1 ou 2, dans lequel ledit message correspond à un message transmis pour l'établissement d'une transaction entre station mobile et réseau.

4. Procédé selon l'une des revendications 1 à 3, dans lequel ledit message correspond à un message de type « Initial UE Message » transmis selon le protocole RANAP (« Radio Access Network Application Part») dans un système de troisième génération de type UMTS.

5. Entité de réseau coeur (SGSN) pour réseau de communications mobiles, comportant :
- des moyens (6) pour recevoir d'au moins une entité de réseau d'accès radio (RNC) qu'elle contrôle, au moins un message relatif à une transaction avec un terminal mobile servi par ladite entité de réseau d'accès radio, ledit message incluant au moins une information d'identité de structure de localisation à laquelle appartient la cellule dans laquelle est localisé ledit terminal mobile au moment de la transmission dudit message,
- des moyens (6) pour utiliser ladite information pour acquérir une connaissance de la configuration de rattachement de structures de localisation aux entités de réseau d'accès radio qu'elle contrôle.

6. Entité selon la revenfication 5, comportant en outre:
- des moyens (7) pour mémoriser des données de configuration ainsi acquises,

7. Entité selon l'une des revendications 5 ou 6, comportant en outre:
- des moyens (8) pour effacer des données de configuration mémorisées, lorsqu'aucun trafic n'est enregistré dans une structure de localisation, notamment au bout d'une durée déterminée.
